# EUROPEAN PATENT APPLICATION

(11) **EP 4 696 125 A2**
(43) Date of publication of application: **18.02.2026**
(21) Application number: 25227811.4
(22) Date of filing: 16.09.2022
(51) Int. Cl.: A01D 34/81, A01D 34/82

(54) **TRIMMER GUARD AND TRIMMER**

(30) Priority: 28.09.2021 US 202117487777
(62) Divisional of application: 22196106.3
(71) Applicant: Techtronic Cordless GP, Anderson, SC 29621 (US)
(72) Inventor: WISEMAN, David, Anderson SC, 29621 (US); SMITH, Josh, Anderson SC, 29621 (US); LOUNSBURY, Colin, Anderson SC, 29621 (US); BOYLES, Tyler, Anderson SC, 29621 (US)
(74) Representative: Zimmermann & Partner Patentanwälte mbB

(57) **Abstract**

Trimmer guards and trimmers are provided. A trimmer guard includes a body having a deck having an inner side adapted for connecting the trimmer guard to a trimmer; an outer side that is substantially arc-shaped. The body of the trimmer has a first edge and a second edge each arranged between the inner side and the outer side. The body further has a skirt extending from the outer side at an angle to the deck. The body includes a line cutter assembly on a bottom surface. When the trimmer guard is connected to a trimmer, the deck and the skirt together define a space for housing a rotary cutting tool of a cutting assembly of the trimmer. A plurality of baffles are formed on the body of the trimmer guard. The baffles are adapted to reduce noise generated by the trimmer during operation.

## Description

### FIELD

The present disclosure relates generally to trimmers, and more particularly to a trimmer guard.

### BACKGROUND

Power tools are generally used to perform manual operations without requiring as much manual labor. In particular, trimmers are utilized for trimming grass and weeds. Trimmers generally utilize trimmer line which is spun at high speeds to break the grass and weeds. However, the trimmer line is subject to damage over periods of use and may become broken or ineffective. Accordingly, operators must advance new trimmer line as the existing trimmer line becomes exhausted. Traditional assemblies utilize manual advancement or bump feeds which activate release of additional trimmer line when the power tool is bumped against a surface, e.g., the ground. This can cause damage to the power tool and is not a desirable method of advancing trimmer line.

One issue with known power tools, such as trimmers, is the noise level that is generated by the motor during operation. A quieter power tool can be produced simply by reducing the power and performance level of the motor of the power tool, but the resulting product is not desirable to the customer due to the lack of performance.

Accordingly, improved power tools are desired in the art. In particular, power tools which include reduced noise generation without sacrificing performance characteristics would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a trimmer guard is provided. The trimmer guard includes a body having a deck having an inner side adapted for connecting the trimmer guard to a trimmer; an outer side that is substantially arc-shaped. The body of the trimmer has a first edge and a second edge each arranged between the inner side and the outer side. The body further has a skirt extending from the outer side at an angle to the deck. The body includes a line cutter assembly on a bottom surface. When the trimmer guard is connected to a trimmer, the deck and the skirt together define a space for housing a rotary cutting tool of a cutting assembly of the trimmer. A plurality of baffles are formed on the body of the trimmer guard. The baffles are adapted to reduce noise generated by the trimmer during operation.

In accordance with another embodiment, a trimmer is provided. The trimmer includes a handle assembly, a cutting assembly arranged at one end of the handle assembly, including a rotary cutting tool arranged to be powered by a power source to perform cutting operations; and a trimmer guard coupled to the cutting assembly. The trimmer guard comprises: a body comprising a deck and a skirt, and a line cutter assembly coupled to the body. The trimmer guard further includes a plurality of baffles formed on the body of the trimmer guard. The baffles are adapted to reduce noise generated by the trimmer during operation.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a view of a trimmer in accordance with embodiments of the present disclosure;
FIG. 2 is an enlarged view of a trimmer head of the trimmer in accordance with embodiments of the present disclosure;
FIG. 3 is an exploded view of the trimmer head of FIG. 2 in accordance with embodiments of the present disclosure;
FIG. 4 is a view of a trimmer guard in accordance with embodiments of the present disclosure;
FIG. 5 is a bottom view of the trimmer guard of FIG. 4 in accordance with embodiments of the present disclosure;
FIG. 6 is a view of a line cutting blade of the trimmer guard of FIGS. 4-5 in accordance with embodiments of the present disclosure;
FIG. 7 is a bottom view of a trimmer guard in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counterclockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, trimmers described in accordance with one or more embodiments herein have trimmer guards with baffles adapted to reduce noise generated during trimmer operation. In some instances, the baffles may include apertures in a deck of the body of the trimmer guard. The baffles may increase destructive interference of noise to achieve a noise reduction effect when the trimmer guard is coupled to the trimmer and the trimmer is operating. Additionally, trimmers described in accordance with one or more embodiments herein have trimmer guards with a line cutting assembly to cut the trimmer line to a predetermined radius. The line cutter assembly can be disposed along an edge of the body of the trimmer guard, or offset from, e.g., generally centered between, edges of the body of the trimmer guard. In some aspects, the line cutter assembly can include a removably coupled blade that can be coupled to the body of the guard in a first position or a second position, where the cutting radius of the line cutter assembly is different in the first position and the second position.

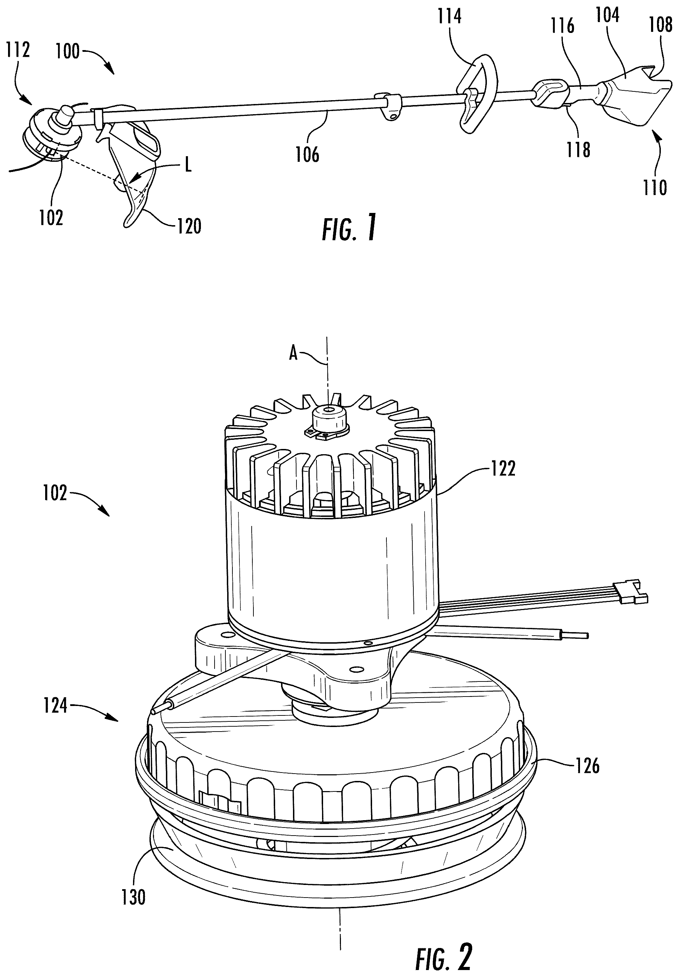

Referring now to the drawings, FIG. 1 illustrates a trimmer 100 including a trimmer head 102, a housing 104, and a connecting member 106 extending between the trimmer head 102 and the housing 104. The housing 104 may include a port 108 configured to be electrically connected with a power source, such as a battery (not illustrated) or wall outlet. The port 108 is illustrated as being disposed at a first end 110 of the trimmer 100 and the trimmer head 102 is disposed at a second end 112 of the trimmer 100. In other embodiments, either one or both of the port 108 or trimmer head 102 can be spaced apart from the first or second end 110 or 112, respectively. In certain instances, the trimmer 100 may be electrically powered, e.g., via the battery or through a wall outlet. In other instances, the trimmer 100 may be powered by a fuel, such as gasoline.

A handle 114 can be disposed along the connecting member 106, the housing 104, or another portion of the trimmer 100, to form a handle assembly. The handle 114 can allow the operator to support the weight of the trimmer 100 during operation. A grip 116 can be disposed along the connecting member 106 to permit a second point of contact for the operator. The grip 116 can include, for example, a portion of the connecting member 106 including a user interface 118. The user interface 118 can include a trigger that allows the operator to selectively control the trimmer 100. The user interface 118 can further include other controls which permit the operator to effect change to the trimmer 100. For instance, by way of non-limiting example, the user interface 118 may include any one or more of a cruise control feature allowing the operator to maintain the operating speed of the trimmer head 102, a turbo which allows the trimmer 100 to reach full operational speed, a power switch having at least ON and OFF functionality, a safety, or any other desirable user controls. As described in greater detail below, the user interface 118 can include a trimmer line advance interface configured to selectively feed trimmer line from the cartridge when actuated. In the illustrated embodiment, the grip 116 and user interface 118 are disposed between the handle 114 and the port 108. In other embodiments, the relatively arrangement of the grip 116, user interface 118, handle 114, and port 108 can be adjusted.

In certain embodiments, the trimmer 100 can further include a guard 120 configured to protect the operator from flying debris kicked up by the trimmer head 102. In certain instances, the guard 120 can be engaged with the connecting member 106 and be disposed adjacent to the trimmer head 102. Features of the guard 120 will be described in further detail below.

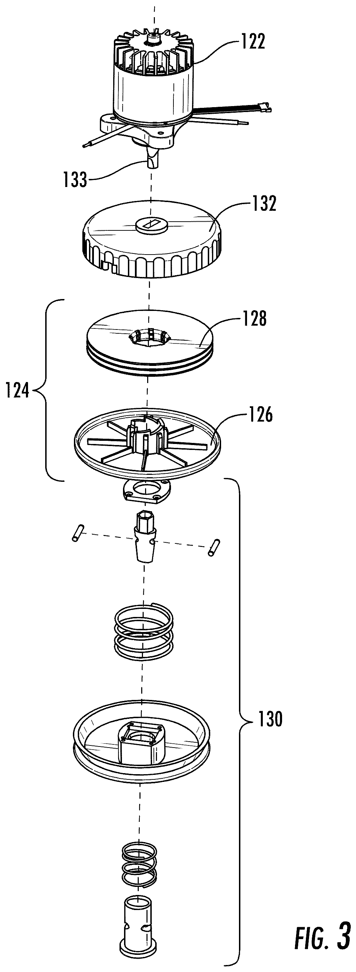

Referring to FIG. 2, the trimmer head 102 can generally include a power source, e.g., a motor 122, configured to drive a subassembly 124 including a flywheel 126 and a cartridge 128 (FIG. 3) containing trimmer line 129. The subassembly 124 can be maintained in operative connection with the motor 122 by an actuation member 130. The actuation member 130 can be selectively moved between an engaged configuration in which the subassembly 124 is coupled to the motor 122 and a disengaged configuration in which the subassembly is detachable from the motor 122. Engaging and disengaging the actuation member 130 can be performed by the operator. When engaged, the actuation member 130 can maintain the trimmer head 102 in a ready-to-use configuration. The actuation member 130 may also protect one or more components of the trimmer head 102 from being impacted or contaminated by debris which might induce unintended feeding of trimmer line from the trimmer head 102.

The motor 122 can define an axis of rotation A about which the subassembly 124 is rotatable. In an embodiment, the actuation member 130 may be moveable between the engaged and disengaged configurations by translating the actuation member 130, or a portion thereof (as described in greater detail below), in a direction generally along the axis of rotation A. For example, in an embodiment, the actuation member 130 can be moved to the engaged configuration by translating the actuation member 130, or a portion thereof, along the axis of rotation A in a direction towards the motor 122. The actuation member 130 can be moved to the disengaged configuration by translating the actuation member 130, or a portion thereof, along the axis of rotation A in a direction away from the motor 122. In another embodiment, these directions may be switched such that the actuation member 130 is moved to the engaged configuration by translating the actuation member 130, or a portion thereof, along the axis of rotation A in a direction away from the motor 122 and moved to the disengaged configuration by translating the actuation member 130, or a portion thereof along the axis of rotation A in a direction toward the motor 122.

FIG. 3 illustrates an exploded view of the trimmer head 102 as seen in accordance with an exemplary embodiment of the present disclosure. A housing 132 can be disposed between the motor 122 and the cartridge 128. In an embodiment, the housing 132 can be rotationally keyed with the motor 122 such that rotational input from the motor 122 causes the housing 132 to rotate. A shaft 133 of the motor 122 can extend through the housing 132 and pass through at least a portion of the subassembly 124. In certain instances, the shaft 133 can rotatably drive the housing 132.

In an embodiment, the housing 132 can be disposed between the subassembly 124 and the motor 122. In an embodiment, the cartridge 128 can be disposed between the flywheel 126 and the housing 132. In an embodiment, the flywheel 126 may extend radially beyond the housing 132 such that a portion of the flywheel 126 is exposed from the trimmer head 102. In an embodiment, the subassembly 124 can be disposed between the housing 132 and the actuation member 130. It should be understood that other spatial arrangements are contemplated herein and that the above-described relative positions of the elements are exemplary only.

In certain instances, the cartridge 128 can be a single-use cartridge. Single-use cartridges allow the operator to replace exhausted cartridges without having to wind trimmer line. That is, the operator can dispose of each cartridge 128 after exhausting the trimmer line associated with that cartridge and replace the exhausted cartridge with a new cartridge already having trimmer line wound thereon. In this regard, replacement of the trimmer line does not require the operator to wind new trimmer line. Instead, the operator can simply replace the exhausted cartridge and resume operation of the trimmer 100. In certain instances, the cartridge 128 can be made using recycled materials. In an embodiment, the cartridge 128 can be reusable. For example, the operator can manually wind trimmer line to the cartridge 128. In this regard, the operator is not left with an unusable cartridge 128 after the trimmer line is depleted.

Trimmer line 129 is generally expended during operational use of the trimmer 100. For example, when performing trimming operations, the trimmer line 129 can become worn or frayed. For instance, upon contacting hard surfaces like rocks, walls, and posts at high speeds, the trimmer line can break. To continue operations after fraying or breaking, additional trimmer line 129 must be dispensed (or fed) from the cartridge 128. Power tools using trimmer line 129 may dispense additional trimmer line 129 using a bump feed method. Under this method, the operator bumps the power tool against the ground which allows trimmer line 129 to be dispensed. Additionally or alternatively, power tools using trimmer line 129 may dispense additional trimmer line without contacting the trimmer head 102 against a secondary surface (such as the ground), e.g., by controlling the motor 122 to dispense trimmer line or by any other suitable means.

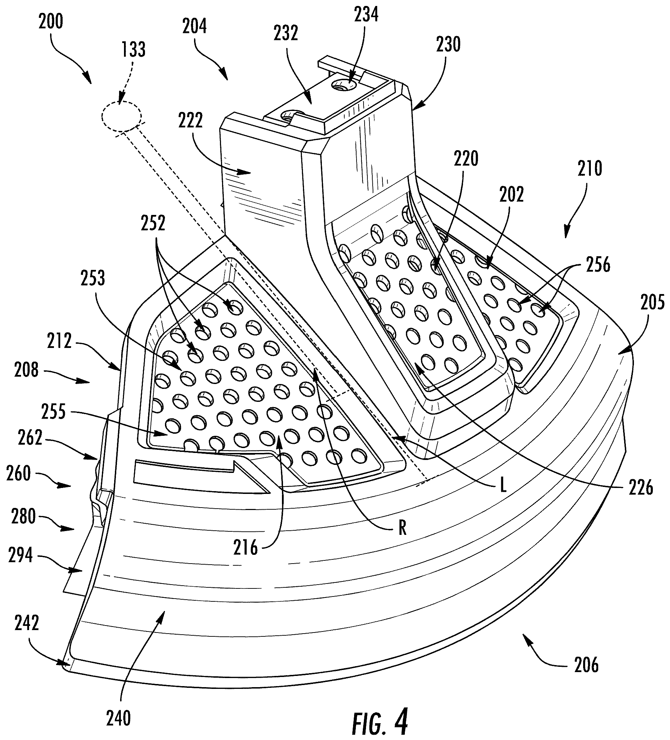

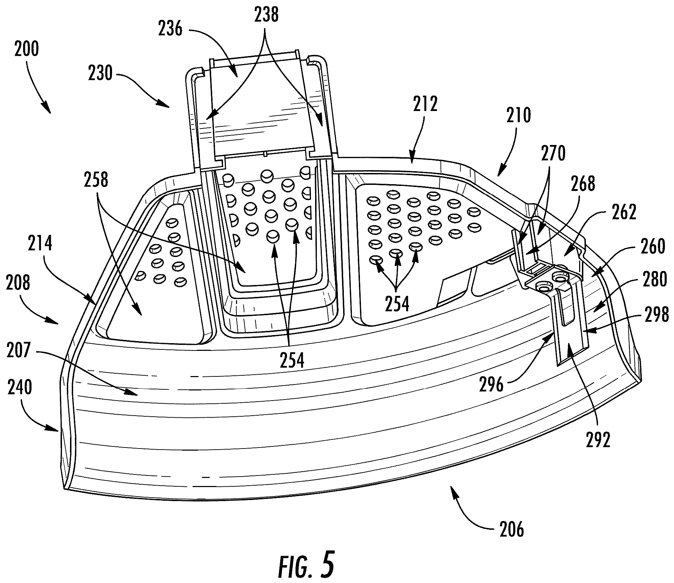

Turning now to FIGS. 4 and 5, a trimmer guard 200 of one embodiment of the present invention will be described in further detail. The trimmer guard 200 is configured to operate with different trimmers, including the trimmer 100 of FIG. 1. The trimmer guard 200 includes a body 201 having a top surface 205 and a bottom surface 207. The body 201 may be integrally formed, e.g., by molding or any other suitable means. The body 201 may be formed from plastic, polymer, etc.

As shown in FIG. 4, the body 201 includes a deck 202 that extends generally in the radial direction from imaginary axis A (e.g., the motor drive shaft of the trimmer) and generally perpendicular to a plane of the axis A. The deck 202 extends between inner side 204 and outer side 206, and generally widens in the direction from the inner side 204 to the outer side 206. In this embodiment, the inner side 204 of the deck 202 includes a structure arranged for connecting the guard to the trimmer, as will be described in further detail below. The outer side 206 of the deck 202 can be substantially arc-shaped. The deck 202 also includes a first edge 208 arranged between the inner side 204 and the outer side 206, and a second edge 210 arranged between the inner side 204 and the outer side 206 and opposite the first edge 208. A first flange 212 may be arranged at the first edge 208 of the deck 202. The first flange 212 can be at an angle to the deck. In some aspects of the invention, the angle can be about 90 degrees. The first flange 212 can be substantially straight. In the present embodiment, the first flange 212 may have a height of about 4 mm. Optionally, a second flange 214 may be arranged at the second edge 210 of the deck 202. The second flange 214 may also be disposed at an angle to the deck 202. For instance, the angle between the second flange 214 and the deck 202 can be about 90 degrees.

The deck 202 can include a radially extending recess 218 that forms a recessed surface 216. In some aspects of the invention, there can be two or more recesses 218 having recessed surfaces 216, as illustrated in FIG. 4. Moreover, the body 201 can include a protruding section 220 that protrudes upwardly from the deck 202. The protruding section 220 can have a first sidewall 222 and a second sidewall 224 each extending in an upward direction from the deck 202. For instance, the first sidewall 222 and the second sidewall 224 can extend upwardly between two recessed surfaces 216. The protruding section 220 can further include an upper surface 226 having a recessed surface 228 disposed thereon. As illustrated in FIG. 4, the recessed surface(s) 216 and the protruding section 220 can be formed by contours in the top surface 205 of the deck 202, and a smooth transition may be provided between each contour.

Additionally, as shown in FIGS. 4 and 5, the protruding section 220 can include a neck 230. The neck 230 can be disposed proximal to the inner side 204 of the deck 202. The neck 230 can be adapted for connecting the trimmer guard 200 to a trimmer, e.g., the trimmer 100. For instance, the neck 230 can include a radial connection surface 232 extending in a generally radial direction from the axis A. The radial connection surface 232 can include one or more openings 234 for receiving fasteners (not shown) to couple the trimmer guard 200 to a trimmer. For instance, the radial connection surface 232 can include two openings 234, as illustrated in FIG. 4, or any suitable number of openings needed to affix the trimmer guard 200 to the trimmer. Additionally, the neck 230 can include an axial connection surface 236 (FIG. 5). The axial connection surface 236 can be generally perpendicular to the radial connection surface 232. The axial connection surface 236 can include one or more connection grooves 238. The connection grooves 238 may be adapted to receive complementary connection features of the trimmer 100 to aid in coupling the trimmer guard 200 to the trimmer. A person skilled in the art would appreciate that the specific construction of the mounting surfaces 232, 236 can change depending on the corresponding mounting structure on the trimmer. For example, it is possible to mount the trimmer guard 200 to the trimmer using other means, for example using mechanical connection such as snap fit, friction fit, snap connection, or using electromagnetic connection such as magnetic coupling.

From FIG. 5 it can be seen that the recess(es) 218 provide a protrusion at the bottom side 207 of the deck 202 and the protruding section 220 can form a recess at the bottom side 207 of the deck 202. In other words, the contours of the recess(es) 218 and the protruding section 220 of the top surface 205 can form opposite contours on the bottom side 207.

Turning back to FIG. 4, the body 201 further includes a skirt 240 that is at an angle to the deck 202 and extends downwardly from the outer side 206. Preferably, the skirt 240 extends along the entire outer side 206, e.g., from the first edge 208 to the second edge 210. The angle between the skirt 240 and the deck 202 can be in a range from about 90 degrees to about 135 degrees. The skirt 240 can connect with the first flange 212 and/or the second flange 214. Optionally, an angle between the skirt 240 and the first flange 212 and/or the second flange 214 can be about 90 degrees. The bottom edge of the skirt 240 may include a protruding edge 242 that extends generally outwardly in the radial direction.

When the guard 200 is mounted to the trimmer, the deck 202 and the skirt 240 together define a space arranged for housing the rotary cutting tool (e.g., trimmer line) of the cutting assembly of the trimmer. Preferably, the body 201 defines a rotary cutting tool inlet arranged at the second edge 210 and a rotary cutting tool outlet arranged at the first edge 208. During operation, the trimmer line is driven to rotate in the space, along a generally circular path. When the trimmer line rotates, the skirt 240 shields the outer end of the trimmer line, preventing debris from shooting radially outwardly or upwardly from below the deck 202.

As shown in FIGS. 4-5, multiple baffles 250 may be arranged on the body 201 of the trimmer guard 200. For instance, the baffles 250 may include apertures 252 extending from the top surface 205 to the bottom surface 207 of the body 201. The apertures 252 can have a generally circular cross-sectional shape, as illustrated in FIGS. 4-5, or any other suitable cross-sectional shape such as an oval shape, irregular rounded shape, regular or irregular polygon shape, e.g., triangular, rectangular, hexagonal, etc., or any other desired shape. In some aspects of the present invention, the apertures 252 can have substantially identical cross-sectional shapes, whereas in other aspects of the present invention the apertures 252 can have varying cross-sectional shapes. As shown in FIGS. 4-5, the apertures 252 can have substantially equal dimensions. However, in other aspects of the present invention, the apertures 252 can have varying dimensions. In one example of the present invention, the apertures 252 can have a diameter in a range from about 0.5 mm to about 6.4 mm. In some embodiments, the apertures 252 can have a diameter of about 6.35 mm.

In some aspects of the invention, the body 201 can further include one or more indentations 256 in the top surface 205 of the body 201. The indentations 256 may have the same or similar size and/or shape as the apertures 252. However, the indentations 256 may not extend from the top surface 205 through to the bottom surface 207. For instance, on the bottom surface 207 of the recessed surface(s) 216 and/or 226, there may be a solid surface 258 that corresponds to a protected area 255 described below.

As illustrated in FIGS. 4-5, the baffles 250 can be arranged on the deck 202 of the body 201 of the trimmer guard 200. For instance, the baffles 250 can be arranged on the recessed surface(s) 216 and the protruding recessed surface 226 of the deck 202. In particular, the baffles can be positioned within a radius R extending from an axis of rotation of the trimmer, through the inner side 204 of the deck 202 of the body 201. The radius R can be less than or equal to a length L extending from the axis of rotation of the trimmer, through the inner side 204 to the outer side 206 of the deck 206. In some aspects of the invention, the radius R can be less than or equal to about 80% of the length L. In such an arrangement, the baffles 250 can be spread over a noise suppression area 253 of the deck 202, which can cover a majority of the surface area of the deck 202, while providing a protected area 255 adjacent to the outer side 206 of the deck 202 to prevent debris from passing through apertures 252 at the outer side 206 of the guard 200. In an example embodiment, the length L can be about 17 inches and the radius R can be about 13.6 inches. In another example embodiment, the length L can be about 15 inches and the radius R can be about 12 inches.

In some arrangements, the baffles 250 can be arranged in lines, e.g., columns 254, generally extending in a radial direction between the inner side 204 and the outer side 206. The columns 254 may be disposed generally parallel to each other. In some aspects of the present invention, the columns 254 may be radially offset from each adjacent column 254 such that the apertures 252 and/or indentations 256 in a column 254 are offset from the apertures 252 and/or indentations 256 of adjacent columns. For instance, the apertures 252 and/or indentations 256 of adjacent columns 254 may be offset from each other in an axial direction. For example, the apertures 252 and/or indentations 256 of adjacent columns 254 may not overlap in the axial direction, as shown in FIGS. 4 and 5. Additionally, within each column 254, the apertures 252 and/or indentations 256 may be generally evenly spaced apart in the axial direction. However, even if the baffles 250 are not arranged in lines or columns 254, the baffles 250 may be generally evenly spread across the noise suppression area 253 of the deck 202.

The arrangement of baffles 250, including apertures 252, in the body 201 of the trimmer guard 200 can increase destructive interference of noise to achieve a noise reduction effect when the trimmer guard 200 is coupled to a trimmer 100. The noise reduction effect can be maximized when the baffles 250 are generally spaced evenly across the deck 202, e.g., within the noise suppression area 253 of the deck 202. By "generally spaced evenly," the present inventors contemplate the baffles 250 having approximately equal distance between adjacent apertures 252 and the apertures 252 being spread across the entire noise suppression area 253 from the first side 208 to the second side 210 and from the inner side 204 to the protected area 255. It is envisaged that the dimension of the trimmer guard 200, and in particular of the deck 202 and the baffles 250, can be modified while still achieving a noise reduction effect.

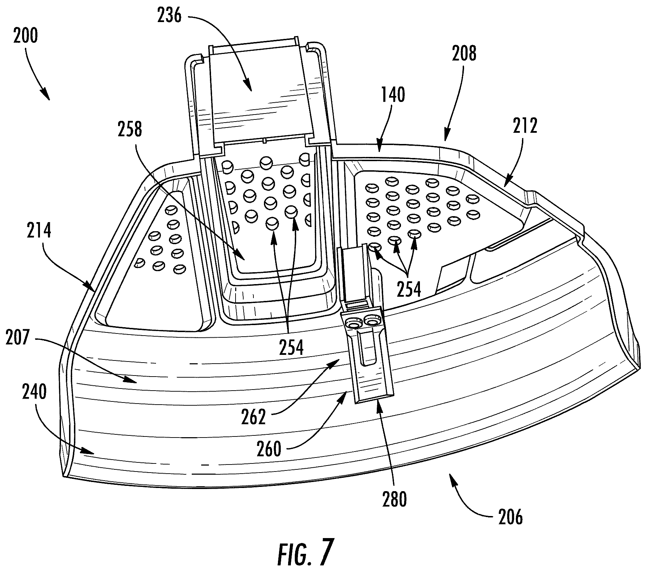

With reference to FIGS. 4-6, the trimmer guard 200 can further include a line cutter assembly 260. The line cutter assembly 260 may include a blade mount 262 coupled to the body 201. For instance, the blade mount 262 may be integrally formed with the body. The blade mount 262 can be disposed along the first edge 208 or the second edge 210, as shown in FIGS. 4 and 5. In another aspect of the present invention, as illustrated in FIG. 7, the blade mount 262 may be offset or spaced apart from both the first edge 208 and the second edge 210.

As best seen in FIG. 5, the blade mount 262 is arranged to receive a blade 280 for cutting the excess length of the trimmer line. In one aspect of the present invention, the blade mount 262 can be arranged such that a cutting edge of the blade 280 mounted inside is perpendicular to the trimmer line and extends generally vertically in the inner side of the skirt 240. The blade mount 262 can include a radial mounting surface 264 extending generally perpendicular to the axis A. The radial mounting surface 264 can include one or more inserts 266 for receiving fastener(s) to secure the blade 280 to the blade mount 262. Additionally, the blade mount 262 can include an inner axial mounting surface 268 and an outer axial mounting surface 272 opposite the inner axial mounting surface 268. For instance, the outer axial mounting surface 272 can be disposed proximal to the skirt 240. The radial mounting surface 264 may extend between the inner axial mounting surface 268 and the outer axial mounting surface 272. The inner axial mounting surface 268 can include mounting guides 270 for aligning and/or receiving a portion of the blade 280. Similarly, the outer axial mounting surface 272 can include mounting guides 274 for aligning and/or receiving a portion of the blade 280. Optionally, the blade mount 262 can include one or more reinforcing ribs 276 connected between the blade mount 262 and the bottom side 207 of the deck 202.

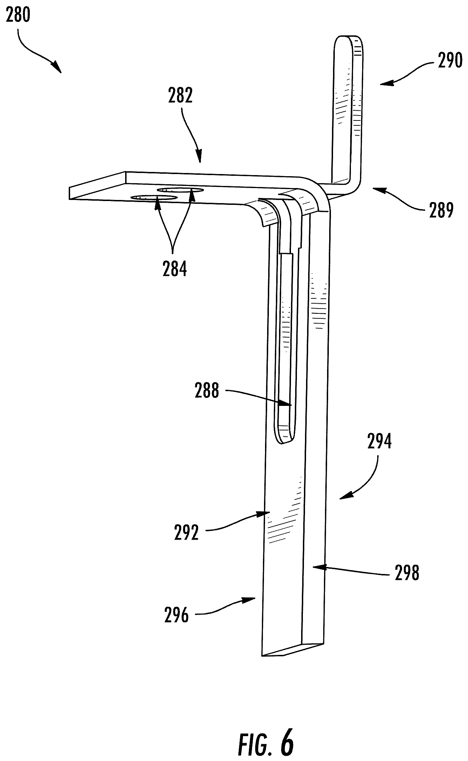

The blade 280 is illustrated in FIG. 6 in more detail. The blade 280 can include a radial mounting portion 282 configured to be coupled to the radial mounting surface 264 of the blade mount 262. The radial mounting portion 282 can include one or more openings 284 configured to receive a fastener therein. For instance, the radial mounting portion 282 can include two openings 284, each configured to receive a fastener therein such as a screw, in order to couple the radial mounting portion 282 to the radial mounting surface 264 of the blade mount 262.

The blade 280 further includes a cutting portion 286. The cutting portion 286 can be disposed generally perpendicular to the radial mounting portion 282. In other words, the cutting portion 286 can be disposed generally parallel to the axis A of the motor 122 when the trimmer guard 200 is coupled to the trimmer 100. The cutting portion 286 can have a first side 292 and a second side 294. A first cutting surface 296 may be formed as an angled blade on one lateral edge of the first side 292, and a second cutting surface 298 may be formed as an angled blade on the opposite lateral edge of the first side 294, as seen in FIGS. 5, 6 and 7.

Further, as shown in FIG. 6, an aligning flange 290 may be formed extending from the radial mounting portion 282 of the blade 280. The aligning flange 290 can extend at a bent angle 289 in an upward direction from the radial mounting portion 282. Moreover, the aligning flange 29 can be formed from a cut-out section 288 of the cutting portion 286. More specifically, the cutting portion 286 of the blade 280 can have a cut-out section 288 formed from the first side 292 to the second side 294 adjacent to the radial mounting portion 282. The aligning flange 290 may be formed from the material that is cut out from the cutting portion 286, as shown in FIG. 6. The aligning flange 290 can extend generally parallel to the axis A and may be configured to align with the inner axial mounting surface 268 and/or the outer axial mounting surface 272 of the blade mount 262.

The blade 280 can be mounted to the blade mount 262 in a first position having a first cutting radius and/or a second position having a second cutting radius. The first cutting radius may be larger than the second cutting radius. Each of FIGS. 4, 5 and 7 illustrates the blade 280 in the first position with respect to the blade mount 262, in which the second side 294 of the cutting portion 284 of the blade 280 faces the skirt 240 of the body 201. In this configuration, the aligning flange 290 of the blade 280 may be aligned with the outer axial mounting guides 274 of the outer axial mounting surface 272 of the blade mount 262. In the second position (not shown), the aligning flange 290 of the blade 280 may be aligned with the inner axial mounting guides 270 of the inner axial mounting surface 268 of the blade mount 262. The difference between the first cutting radius and the second cutting radius may be approximately equal to two times a distance between the openings 284 and the cutting portion 286 along the radial mounting portion 282 of the blade 280. For example, if the distance between the openings 284 and the cutting portion 286 along the radial mounting portion 282 of the blade 280 is about one (1) inch, the first cutting radius may be about two (2) inches larger than the second cutting radius.

Turning now to FIG. 7, a bottom view of another embodiment of a trimmer guard 200 of the present invention is shown. In particular, the trimmer guard 200 as shown in FIG. 7 can have a line cutter assembly 260 that is offset from the sides 208 and 210 of the body 201 of the trimmer guard 200. For instance, the line cutter assembly 260 can be generally centered between the first side 208 and the second side 210. In other aspects of the invention, the line cutter assembly 260 can be spaced apart from both the first side 208 and the second side 210 in an off-center position, i.e., nearer to either the one of the first side 208 or the second side 210.

Further aspects of the invention are provided by one or more of the following embodiments:
Embodiment 1. A trimmer guard for a line trimmer, comprising: a body comprising a deck having an inner side adapted for connecting the trimmer guard to a trimmer, an outer side that is substantially arc-shaped, a first edge arranged between the inner side and the outer side, a second edge opposite the first edge and arranged between the inner side and the outer side, and a skirt extending from the outer side at an angle to the deck; a line cutter assembly on a bottom surface of the body; and a plurality of baffles formed on the body of the trimmer guard, wherein the baffles are adapted to reduce noise generated by the trimmer during operation; wherein when the trimmer guard is connected to a trimmer, the deck and the skirt together define a space for housing a rotary cutting tool of a cutting assembly of the trimmer.
Embodiment 2. The trimmer guard of any one or more of the embodiments, wherein the baffles are formed on the deck of the body.
Embodiment 3. The trimmer guard of claim 1, wherein the baffles are formed in a recessed surface of the body.
Embodiment 4. The trimmer guard of any one or more of the embodiments, wherein the baffles comprise apertures extending through the body from a top surface of the body to a bottom surface of the body.
Embodiment 5. The trimmer guard of any one or more of the embodiments, further comprising indentations in the top surface of the body, wherein the indentations do not extend to the bottom surface of the body, wherein the indentations and the apertures have a substantially same cross-sectional shape.
Embodiment 6. The trimmer guard of any one or more of the embodiments, wherein the apertures comprise a circular cross-sectional shape.
Embodiment 7. The line trimmer of any one or more of the embodiments, wherein the apertures are disposed in a plurality of columns, wherein apertures in adjacent rows are radially offset from each other.
Embodiment 8. The trimmer guard of any one or more of the embodiments, wherein the line cutting assembly comprises a line cutting blade coupled to a blade mount.
Embodiment 9. The trimmer guard of any one or more of the embodiments, wherein the blade mount is formed in one piece with the body of the trimmer guard.
Embodiment 10. The trimmer guard of any one or more of the embodiments, wherein the line cutting blade is configured to be removably coupled to the blade mount in a first position having a first cutting radius and a second position having a second cutting radius.
Embodiment 11. The trimmer guard of any one or more of the embodiments, wherein the line cutting blade has a first side and a second side opposite the first side, wherein in the first position, the first side is disposed facing the skirt, and in the second position, the second side is disposed facing the skirt.
Embodiment 12. The trimmer guard of any one or more of the embodiments, wherein the first cutting radius is greater than the second cutting radius.
Embodiment 13. The trimmer guard of any one or more of the embodiments, wherein the line cutting blade comprises a radial mounting portion configured to be coupled to a radial mounting surface of the blade mount.
Embodiment 14. The trimmer guard of any one or more of the embodiments, wherein the line cutting blade comprises an axial aligning flange configured to align with a mounting surface of the blade mount.
Embodiment 15. The trimmer guard of any one or more of the embodiments, wherein the blade mount comprises an inner axial mounting surface and an outer axial mounting surface, further wherein each of the inner axial mounting surface and the outer axial mounting surface comprises mounting guides configured to receive the axial aligning flange of the line cutting blade.
Embodiment 16. The trimmer guard of any one or more of the embodiments, wherein the axial aligning flange is formed from a cut-out section of a cutting portion of the line cutting blade.
Embodiment 17. The trimmer guard of any one or more of the embodiments, wherein the line cutting assembly is disposed along the first edge or the second edge of the body.
Embodiment 18. The trimmer guard of any one or more of the embodiments, wherein the line cutting assembly is offset from both the first edge and the second edge of the body.
Embodiment 19. The trimmer guard of any one or more of the embodiments, wherein the line cutting assembly is generally centered between the first edge and the second edge of the body.
Embodiment 20. A trimmer comprising: a handle assembly; a cutting assembly arranged at one end of the handle assembly, including a rotary cutting tool arranged to be powered by a power source to perform cutting operations; and a trimmer guard coupled to the cutting assembly, wherein the trimmer guard comprises: a body comprising a deck and a skirt, a line cutter assembly coupled to the body, and a plurality of baffles formed on the body of the trimmer guard, wherein the baffles are adapted to reduce noise generated by the trimmer during operation.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A trimmer guard for a line trimmer, comprising:
a body comprising a deck having an inner side adapted for connecting the trimmer guard to a trimmer, an outer side, a first edge arranged between the inner side and the outer side, a second edge opposite the first edge and arranged between the inner side and the outer side; and
a plurality of baffles comprising apertures extending through the body of the trimmer guard, wherein the baffles are adapted to reduce noise generated by the trimmer during operation;
wherein when the trimmer guard is connected to a trimmer, the deck defines a space for housing a rotary cutting tool of a cutting assembly of the trimmer.

2. The trimmer guard of claim 1, wherein the baffles are located in the deck of the body and/or in a recessed surface of the body.

3. The trimmer guard of any of the preceding claims, wherein the apertures extend through the body from a top surface of the body to a bottom surface of the body.

4. The trimmer guard of any of the preceding claims, wherein the apertures are disposed in a plurality of columns, wherein apertures in adjacent rows are radially offset from each other.

5. The trimmer guard of any of any of the preceding claims, further comprising indentations in the top surface of the body, wherein the indentations do not extend to the bottom surface of the body, wherein the indentations and the apertures have a substantially same cross-sectional shape.

6. The trimmer guard of any of the preceding claims, wherein the baffles are spread across a noise suppression area of the deck, optionally wherein the noise suppression area covers a majority of surface area of the deck.

7. The trimmer guard of claim 6, wherein the baffles are generally evenly spread across the noise suppression area.

8. The trimmer guard of any of claims 6 to 7, wherein the baffles are spread from the inner side of the deck to a protected area of the deck adjacent to the outer side of the deck.

9. The trimmer guard of any of claims 6 to 8, wherein the baffles are spread from a first side to a second side of the noise suppression area.

10. The trimmer guard of any of the preceding claims, wherein the apertures comprise a circular cross-sectional shape.

11. The trimmer guard of any of the preceding claims, wherein the outer side is substantially arc-shaped.

12. The trimmer guard of any of the preceding claims, wherein the body further comprises a skirt extending from the outer side at an angle to the deck.

13. The trimmer guard of any of the preceding claims, wherein the trimmer guard further comprises a line cutter assembly on a bottom surface of the body.

14. A trimmer comprising:
a handle assembly;
a cutting assembly arranged at one end of the handle assembly, including a rotary cutting tool arranged to be powered by a power source to perform cutting operations; and
the trimmer guard of any of the preceding claims.
